# FASCICULE DE BREVET EUROPEEN

(11) **EP 2 456 635 B1**
(45) Date de publication et mention de la délivrance du brevet: **09.10.2019**
(21) Numéro de dépôt: 10736752.6
(22) Date de dépôt: 07.07.2010
(51) Int. Cl.: B60K 37/04

(54) **PROCÉDÉ DE FABRICATION D'UNE INTERFACE HOMME/MACHINE POUR VÉHICULE AUTOMOBILE ET INTERFACE HOMME/MACHINE CONFIRME À CE PROCÉDÉ**
VERFAHREN ZUR HERSTELLUNG EINER MENSCH-MASCHINE-SCHNITTSTELLE FÜR EIN KRAFTFAHRZEUG UND ANHAND DES VERFAHRENS HERGESTELLTE MENSCH-MASCHINE-SCHNITTSTELLE
METHOD FOR MANUFACTURING A HUMAN-MACHINE INTERFACE FOR A MOTOR VEHICLE, AND HUMAN-MACHINE INTERFACE PRODUCED BY SAID METHOD

(30) Priorité: 21.07.2009 FR 0955087
(43) Date de publication de la demande: 30.05.2012
(73) Titulaire: Valeo Systèmes Thermiques, 78320 La Verriere (FR)
(72) Inventeur: AUTRAN, Frédéric, F-75018 Paris (FR); EL KHOURY, Ziad, F-92160 Antony (FR)
(74) Mandataire: Pothmann, Karsten
(86) Numéro de dépôt international: PCT/FR2010/000496
(87) Numéro de publication internationale: WO 2011/010008

(56) Documents cités:
- EP-A2- 0 869 036
- WO-A2-2004/068077
- WO-A2-2004/103772
- DE-A1- 19 623 406
- GB-A- 2 416 338

## Description

### Domaine technique de l'invention

La présente invention concerne un procédé de fabrication d'une interface homme/machine pour véhicule automobile ainsi qu'une interface homme/machine obtenue selon ce procédé.

Il est connu de munir les véhicules automobiles, dans une zone centrale de leur planche de bord, d'une interface homme/machine comprenant un écran multifonction permettant d'afficher des informations, par exemple relatives à un lecteur multimédia ou à une assistance de positionnement satellite.

Dans certains cas, cet écran multifonction présente un écran tactile permettant sa commande par de simples contacts de l'écran.

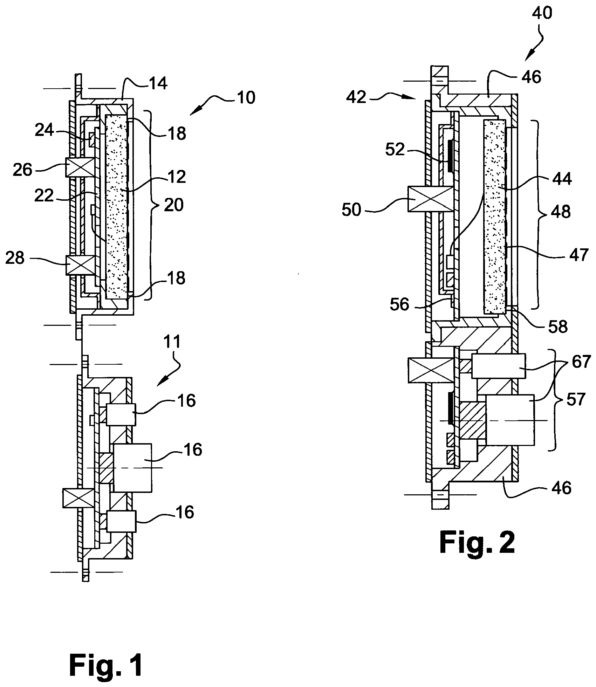

En référence à la figure 1 est représentée en coupe une telle interface homme/machine 10 connue. Typiquement, cette interface homme/machine 10 comprend un écran 12, par exemple à technologie TFT - pour « Thin Film Transistor » - en anglais, destiné à afficher des informations à l'usage d'un utilisateur.

Cet écran TFT 12 est placé dans un boîtier, ou capot, 14 assurant l'intégration de l'ensemble des éléments de l'interface homme/machine 10 en un seul bloc pouvant dans une zone centrale de la planche de bord.

Dans cette zone centrale, il est également connu de loger au moins une autre interface homme-machine 11 permettant de commander des équipements, tels qu'une climatisation et/ou un poste radio. Dans ce cas, une telle interface 11 peut comprendre des boutons 16 poussoir ou rotatifs.

Le boîtier 14 présente une ouverture 20 dont la forme correspond au contour de l'écran 12, cette ouverture 20 permettant à un utilisateur de l'interface homme/machine 10 de visualiser les informations affichées sur l'écran 12.

Cet écran 12 est commandé par un circuit imprimé 22, et plus précisément par un microcontrôleur 24 situé sur ce dernier, relié à l'écran 12 par une connexion interne.

Ce microcontrôleur 24 gère également les communications avec le réseau de bord du véhicule via des connecteurs 26 et 28 logés dans le capot arrière 30 de l'interface homme/machine 10.

Bien que de telles interfaces homme/machine 10 muni d'écran multifonction puissent intégrer aisément une planche de bord d'un véhicule par simple fixation dans un logement dédié sous la forme de bloc, elle présente de nombreux inconvénients.

Un premier inconvénient résulte du contour 18 de l'écran 20, généralement rectangulaire, qui limite les styles et/ou les conceptions de planche de bord devant intégrer cette forme imposée.

Un second inconvénient résulte du coût de fabrication de telles interfaces homme/machine, ce coût étant d'autant plus élevé que le nombre d'interfaces produites est faible alors même qu'un tel faible nombre d'interfaces produites permet d'avoir un type d'interface homme/machine spécifique associé à un modèle et/ou à une gamme de véhicule.

Le document EP 0 869 036 A2 divulgue le préambule de la revendication 1.

La présente invention vise à résoudre au moins un des inconvénients précédemment mentionnés. Elle résulte de la constatation que l'utilisation par le module d'écran de moyens de commande communs à l'ensemble de l'interface homme/machine rend coûteuse l'utilisation d'un même module d'écran avec différentes interfaces car ces moyens de commande doivent être adaptés au module associé pour chaque interface homme/machine.

C'est pourquoi, la présente invention concerne un procédé de fabrication d'interfaces homme/machine comprenant un module d'écran multifonction agencé à un boîtier présentant une ouverture destinée à permettre à un utilisateur de visualiser des informations affichées sur cet écran, caractérisé en ce que, chaque module d'écran est muni de moyens propres de commande comprenant un connecteur et un microcontrôleur, on fabrique différentes interfaces homme/machine à partir de mêmes modules d'écran en agençant ces modules d'écran dans des boîtiers logeant un tableau de commande, muni d'au moins une commande et/ou d'au moins un indicateur, d'une fonction indépendante de l'écran.

Un tel procédé de fabrication présente de nombreux avantages. Notamment, il permet d'utiliser un même module d'écran pour fabriquer différentes interfaces de façon simple et avec un coût limité puisque les moyens de commande de ces interfaces ne doivent pas être modifiés pour prendre en compte le module d'écran qui comprend ses propres moyens de commande.

En outre, un tel procédé permet d'intégrer aisément différents équipements dans un tableau de bord, ces équipements étant intégrés dans un même boîtier que le module écran, formant ainsi un seul bloc pour le module écran et pour le tableau de commandes intégrés dans ce boîtier.

Finalement, l'invention permet d'associer différentes ouvertures à un même module d'écran, ce qui accroît les styles et/ou les conceptions possibles des interfaces homme/machine intégrant un même module d'écran.

De façon corollaire, le coût de fabrication d'une interface homme/machine conformément à l'invention est limité puisqu'un nombre élevé d'interfaces peuvent être produites en utilisant un même module d'écran multifonction, ce qui réduit le coût de ce dernier.

Selon une réalisation, différentes interfaces homme/machine présentent différentes formes d'ouvertures.

Dans une réalisation, différentes ouvertures d'écran masquent, de façon distincte, le contour de l'écran vis-à-vis d'un utilisateur de l'interface homme/machine.

Selon une réalisation, on recouvre l'ouverture des boîtiers d'une surface transparente ou semi-transparente.

Dans une réalisation, on associe à la surface transparente ou semi-transparente des moyens de commande tels que, par exemples, des détecteurs de contacts afin de former une surface tactile.

Selon une réalisation, on relie les moyens de commande du module d'écran à un connecteur de l'interface homme/machine extérieur à ce module d'écran.

L'invention concerne également une Interface homme/machine comprenant un module d'écran multifonction agencé à un boîtier présentant une ouverture d'écran destinée à permettre à un utilisateur de visualiser des informations affichées sur cet écran, caractérisé en ce que le module d'écran est muni de moyens propres de commande comprenant un connecteur et un microcontrôleur, et en ce que le boîtier loge un tableau de commande, muni d'au moins une commande et/ou d'au moins un indicateur, d'une fonction indépendante de l'écran.

Dans une réalisation, l'ouverture d'écran masque, totalement ou partiellement, le contour de l'écran vis-à-vis d'un utilisateur de l'interface homme/machine.

Dans une réalisation, l'ouverture d'écran est recouverte par une surface transparente ou semi-transparente pouvant comprendre des moyens de commande tels que des détecteurs de contact afin de former une surface tactile.

Selon une réalisation, les moyens de commande du module d'écran sont reliés à un connecteur de l'interface homme/machine extérieure à ce module d'écran.

Finalement, l'invention concerne également un procédé d'assemblage d'une interface homme/machine comprenant un écran multifonction agencé à un boîtier destiné à être logé dans le tableau de bord d'un véhicule, caractérisé en ce que l'interface étant conforme à l'une des réalisations précédentes, on insère cette interface homme/machine dans le tableau de bord en un seul bloc.

D'autres caractéristiques et avantages de l'invention ressortiront clairement de la description qui en est donnée ci-dessous, à titre indicatif et nullement limitatif, en référence aux différentes figures annexées qui montrent :
- à la figure 1, déjà décrite, une vue en coupe d'une interface homme/machine connue munie d'un écran multifonction,
- aux figures 2 à 4, des vues en coupe d'interfaces homme/machine conformes à l'invention munies d'un écran tactile,
- aux figures 5 à 7, des vues en coupe d'interfaces homme/machine conformes à l'invention munies d'une surface de recouvrement de l'ouverture d'écran à écran tactile, et
- à la figure 8, une comparaison schématique d'interfaces hommes/machines connues avec des interfaces hommes/machines conformes à l'invention.

### Description des formes de réalisation préférées de l'invention

Les éléments identiques, par structure ou par fonction, apparaissant sur différentes figures conservent, sauf précision contraire, les mêmes références.

En référence à la figure 2, une interface homme/machine 40 comprenant un module 42 d'écran multifonction 44 est agencé à un boîtier 46 présentant une ouverture 48 d'écran destinée à permettre à un utilisateur de visualiser des informations affichées sur cet écran 44.

Conformément à l'invention, le module 42 est muni de moyens propres de commande, à savoir dans cette réalisation un connecteur 50 et un microcontrôleur 52 fixé à un circuit imprimé 56 du module 42.

Ainsi, le module 42 peut aisément être inséré dans différentes interfaces homme/machine sans requérir, notamment, une adaptation des moyens de commande des autres éléments associés à ces interfaces.

Dès lors, un même module 42 peut être produit en nombre élevé pour être agencé dans différentes interfaces 40 sans requérir une adaptation des moyens de commande de ces interfaces 40, ce qui réduit le coût de ces modules 42 et de ces interfaces 40.

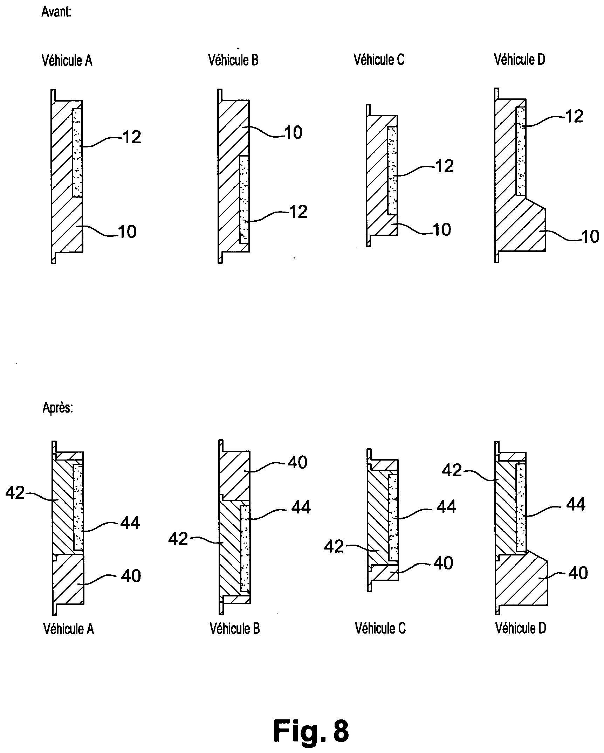

De tels agencements sont illustrés à la figure 8 pour différents types d'interfaces homme/machine de véhicules A, B, C ou D, ces interfaces étant schématiquement représentées en coupe lors de leur fabrication selon un procédé de fabrication conforme à l'art antérieur (« AVANT ») ou conformes à l'invention (« APRES »).

Il apparaît que, contrairement aux interfaces 10 intégrant un écran 12 selon l'art antérieur, les interfaces 40 selon l'invention intégrent un écran 44 à l'aide d'un même module 42, et ce même pour les différents véhicules A, B, C et D de façon à limiter le coût de fabrication de ces interfaces.

Afin de permettre toutefois de donner un style propre à chacune des interfaces fabriquées selon l'invention, l'ouverture 48 (figures 2 à 7) d'écran de chaque interface peut être spécifique, notamment pour masquer, totalement ou partiellement, un contour 58 de l'écran 44 vis-à-vis d'un utilisateur de l'interface homme/machine.

En adaptant la forme de cette ouverture en fonction du modèle et/ou de la gamme de véhicule auquel l'interface est destinée, il est alors possible d'adapter le style et/ou la conception de l'interface 40 nonobstant l'utilisation d'un module 42 commun.

Dans certaines variantes de l'invention représentées aux figures 2 à 4, l'écran est muni d'une surface munie de moyens de commande tactiles 47 permettant de commander le fonctionnement de l'interface par simple contact.

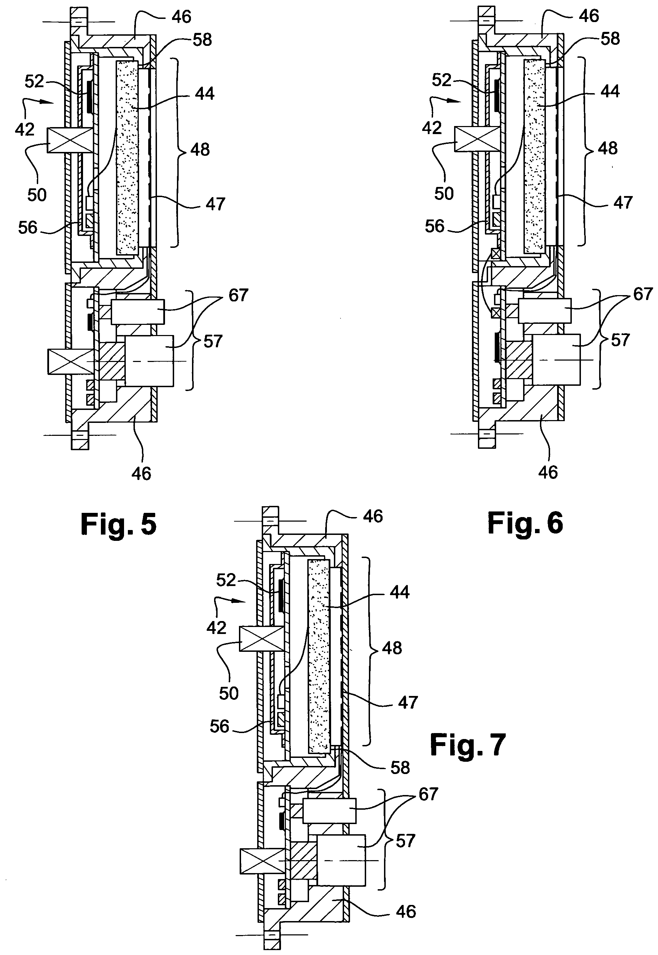

Dans d'autres variantes - figures 5 à 7 - où l'ouverture 48 d'écran est recouverte par une surface 60 transparente ou semi-transparente, cette surface 60 est munie de ces moyens 47 de commande tactiles comprenant notamment des détecteurs de contact.

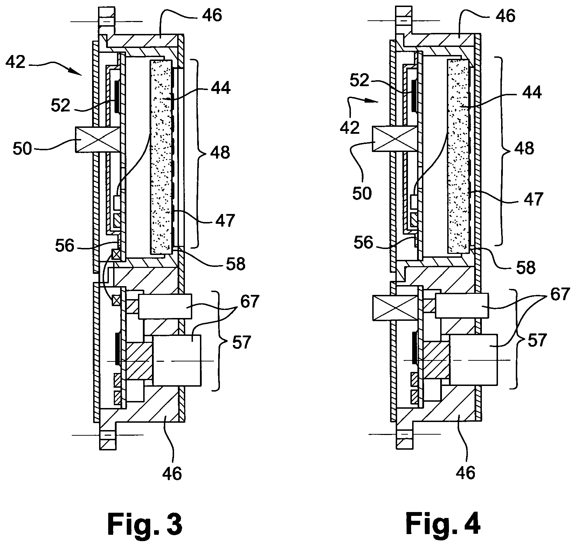

Indépendamment de la présence/location de la surface tactile, il convient de noter qu'une même surface transparente ou semi-transparente peut recouvrir la façade de l'interface homme/machine, comme illustré sur les figures 4 et 7. Ainsi, on munit l'interface 40 d'une surface lisse et homogène.

Selon une variante représentée aux figures 3 et 6, les moyens de commande du module d'écran - en l'espèce le connecteur 50 - peuvent être utilisés par des éléments de l'interface homme/machine extérieurs au module d'écran. Une telle application est notamment intéressante lorsqu'un seul connecteur est requis pour l'ensemble de l'interface homme/machine, auquel cas une liaison interne peut relier le module écran 42 à ces éléments.

Finalement, il convient de noter que l'invention présente l'avantage de permettre une intégration simple et rapide de différents éléments de commande dans un tableau de bord.

En effet, une interface homme/machine 40 comprend, dans un même boîtier, un module écran et un tableau de bord 57, muni d'au moins un bouton 67 de commande et/ou d'au moins un indicateur, relatif à une fonction indépendante de l'écran.

Par exemple, si l'écran affiche exclusivement des informations relatives à un positionnement par satellite, le tableau de bord 57 peut comprendre des commandes relatives à la climatisation.

Dans ce cas, l'assemblage de ce tableau de bord et du module écran dans le tableau de bord est aisé puisqu'ils peuvent être intégrés en un seul bloc.

La présente invention est susceptible de nombreuses variantes. Notamment, il est possible de couvrir la surface d'un pigment, par exemple sous la forme d'une couche ou d'un dépôt de peinture, par sérigraphie ou par collage d'un film plastique, par exemple afin de produire un dégradé de transparence et/ou pour générer un masque opaque visant à masquer des éléments techniques de l'interface.

De même, la façade de l'interface peut être munie de différents éléments - interrupteurs, commandes - et/ou différentes technologies peuvent être mises en oeuvre pour effectuer les fonctions décrites dans l'invention. A titre d'exemple, des capteurs tactiles résistifs ou capacitif peut être utilisés pour obtenir une surface tactile.

## Revendications

1. Procédé de fabrication d'interfaces homme/machine (40) comprenant un module (42) d'écran multifonction (44) agencé à un boîtier (46) présentant une ouverture (48) destinée à permettre à un utilisateur de visualiser des informations affichées sur cet écran (44), **caractérisé en ce que**, chaque module d'écran (42) est muni de moyens propres de commande comprenant un connecteur (50) et un microcontrôleur (52), on fabrique différentes interfaces homme/machine (40) à partir de mêmes modules d'écran (42) en agençant ces modules d'écran (42) dans des boîtiers (46) logeant un tableau (57) de commande, muni d'au moins une commande (67) et/ou d'au moins un indicateur, d'une fonction indépendante de l'écran.

2. Procédé de fabrication selon la revendication 1 **caractérisé en ce que** différentes interfaces homme/machine (40) présentent différentes formes d'ouvertures (48).

3. Procédé de fabrication selon la revendication 2 **caractérisé en ce que** différentes ouvertures (48) d'écran (42) masquent, de façon distincte, le contour (58) de l'écran (42) vis-à-vis d'un utilisateur de l'interface homme/machine.

4. Procédé de fabrication selon la revendication 1, 2 ou 3 **caractérisé en ce qu'**on recouvre l'ouverture (48) des boîtiers (46) d'une surface (47) transparente ou semi-transparente.

5. Procédé de fabrication selon la revendication 4 **caractérisé en ce qu'**on associe à la surface (47) transparente ou semi-transparente des moyens (47) de commande tactiles.

6. Procédé de fabrication selon l'une des revendications 1 à 5 **caractérisé en ce qu'**on relie les moyens de commande (52) du module d'écran (42) à un connecteur du tableau de commande via une liaison (45) interne à l'interface.

7. Interface homme/machine (40) comprenant un module (42) d'écran multifonction (44) agencé à un boîtier (46) présentant une ouverture (48) d'écran destinée à permettre à un utilisateur de visualiser des informations affichées sur cet écran(44), **caractérisé en ce que** le module d'écran (42) est muni de moyens propres de commande comprenant un connecteur (50) et un microcontrôleur (52) et **en ce que** le boîtier (46) loge un tableau (57) de commande, muni d'au moins une commande (67) et/ou d'au moins un indicateur, d'une fonction indépendante de l'écran.

8. Interface homme/machine (40) selon la revendication 7 **caractérisé en ce que** l'ouverture d'écran (48) masque, totalement ou partiellement, le contour (58) de l'écran vis-à-vis d'un utilisateur de l'interface homme/machine.

9. Interface homme/machine (40) selon la revendication 6, 7 ou 8 **caractérisé en ce que** l'ouverture d'écran (48) est recouverte par une surface (47) transparente ou semi-transparente.

10. Interface homme/machine (40) selon la revendication 9 **caractérisé en ce que** la surface transparente ou semi-transparente comprend des moyens (47) de commande tactiles.

11. Interface homme/machine (40) selon l'une des revendications 7 à 10 **caractérisé en ce que** les moyens de commande (52) du module (42) d'écran sont reliés à un connecteur du tableau de commande via une connexion (45) interne au module (42).

## Patentansprüche

1. Verfahren zur Herstellung von Mensch-Maschine-Schnittstellen (40), die ein Modul (42) eines Multifunktionsbildschirms (44) umfassen, das an einem Gehäuse (46) angeordnet ist, welches eine Öffnung (48) aufweist, die dazu bestimmt ist, einem Benutzer zu ermöglichen, auf diesem Bildschirm (44) anzeigte Informationen zu visualisieren, **dadurch gekennzeichnet, dass** jedes Bildschirmmodul (42) mit eigenen Steuerungseinrichtungen versehen ist, die einen Steckverbinder (50) und einen Mikrocontroller (52) umfassen, man verschiedene Mensch-Maschine-Schnittstellen (40) ausgehend von den gleichen Bildschirmmodulen (42) herstellt, wobei man diese Bildschirmmodule (42) in Gehäusen (46) anordnet, die ein Bedienfeld (57), das mit mindestens einem Bedienelement (67) und/oder mindestens einem Anzeiger versehen ist, einer von dem Bildschirm unabhängigen Funktion aufnehmen.

2. Herstellungsverfahren nach Anspruch 1, **dadurch gekennzeichnet, dass** verschiedene Mensch-Maschine-Schnittstellen (40) verschiedene Formen von Öffnungen (48) aufweisen.

3. Herstellungsverfahren nach Anspruch 2, **dadurch gekennzeichnet, dass** verschiedene Öffnungen (48) von Bildschirmen (42) die Kontur (58) des Bildschirms (42) gegenüber einem Benutzer der Mensch-Maschine-Schnittstelle auf unterschiedliche Weise verdecken.

4. Herstellungsverfahren nach Anspruch 1, 2 oder 3, **dadurch gekennzeichnet, dass** man die Öffnung (48) der Gehäuse (46) mit einer transparenten oder halbtransparenten Oberfläche (47) abdeckt.

5. Herstellungsverfahren nach Anspruch 4, **dadurch gekennzeichnet, dass** man der transparenten oder halbtransparenten Oberfläche (47) berührungsempfindliche Bedieneinrichtungen (47) zuordnet.

6. Herstellungsverfahren nach einem der Ansprüche 1 bis 5, **dadurch gekennzeichnet, dass** man die Bedieneinrichtungen (52) des Bildschirmmoduls (42) mit einem Steckverbinder des Bedienfeldes über eine interne Leitung (45) der Schnittstelle verbindet.

7. Mensch-Maschine-Schnittstelle (40), die ein Modul (42) eines Multifunktionsbildschirms (44) umfasst, das an einem Gehäuse (46) angeordnet ist, welches eine Bildschirmöffnung (48) aufweist, die dazu bestimmt ist, einem Benutzer zu ermöglichen, auf diesem Bildschirm (44) angezeigte Informationen zu visualisieren, **dadurch gekennzeichnet, dass** das Bildschirmmodul (42) mit eigenen Bedieneinrichtungen versehen ist, die einen Steckverbinder (50) und einen Mikrocontroller (52) umfassen, und dadurch, dass das Gehäuse (46) ein Bedienfeld (57), das mit mindestens einem Bedienelement (67) und/oder mindestens einem Anzeiger versehen ist, einer von dem Bildschirm unabhängigen Funktion aufnimmt.

8. Mensch-Maschine-Schnittstelle (40) nach Anspruch 7, **dadurch gekennzeichnet, dass** die Bildschirmöffnung (48) die Kontur (58) des Bildschirms gegenüber einem Benutzer der Mensch-Maschine-Schnittstelle vollständig oder teilweise verdeckt.

9. Mensch-Maschine-Schnittstelle (40) nach Anspruch 6, 7 oder 8, **dadurch gekennzeichnet, dass** die Bildschirmöffnung (48) mit einer transparenten oder halbtransparenten Oberfläche (47) abgedeckt ist.

10. Mensch-Maschine-Schnittstelle (40) nach Anspruch 9, **dadurch gekennzeichnet, dass** die transparente oder halbtransparente Oberfläche berührungsempfindliche Bedieneinrichtungen (47) umfasst.

11. Mensch-Maschine-Schnittstelle (40) nach einem der Ansprüche 7 bis 10, **dadurch gekennzeichnet, dass** die Bedieneinrichtungen (52) des Bildschirmmoduls (42) mit einem Steckverbinder des Bedienfeldes über eine interne Verbindung (45) des Moduls (42) verbunden sind.

## Claims

1. Method for manufacturing man-machine interfaces (40) comprising a module (42) of a multifunction screen (44) arranged in a housing (46) having an opening (48) designed to allow a user to view information displayed on this screen (44), **characterized in that** each screen (42) module is furnished with specific control means comprising a connector (50) and a microcontroller (52), various man-machine interfaces (40) are manufactured based on the same screen (42) modules by arranging these screen (42) modules in housings (46) accomodating a control panel (57), furnished with at least one control (67) and/or at least one indicator, of an independent function of the screen.

2. Manufacturing method according to Claim 1, **characterized in that** various man-machine interfaces (40) have various shapes of openings (48).

3. Manufacturing method according to Claim 2, **characterized in that** various screen (42) openings (48) mask, in a distinct manner, the contour (58) of the screen (42) with respect to a user of the man-machine interface.

4. Manufacturing method according to Claim 1, 2 or 3, **characterized in that** the opening (48) of the housings (46) is covered with a transparent or semitransparent surface (47).

5. Manufacturing method according to Claim 4, **characterized in that** touch-control means (47) are associated with the transparent or semitransparent surface (47).

6. Manufacturing method according to one of Claims 1 to 5, **characterized in that** the control means (52) of the screen module (42) are linked to a control panel connector via a link (45) internal to the interface.

7. Man-machine interface (40) comprising a module (42) of a multifunction screen (44) arranged in a housing (46) having a screen opening (48) designed to allow a user to view information displayed on this screen (44), **characterized in that** the screen (42) module is furnished with specific control means comprising a connector (50) and a microcontroller (52) and **in that** the housing (46) accommodates a control panel (57) furnished with at least one control (67) and/or at least one indicator, of an independent function of the screen.

8. Man-machine interface (40) according to Claim 7, **characterized in that** the screen opening (48) masks, totally or partially, the contour (58) of the screen with respect to a user of the man-machine interface.

9. Man-machine interface (40) according to Claim 6, 7 or 8, **characterized in that** the screen opening (48) is covered by a transparent or semitransparent surface (47).

10. Man-machine interface (40) according to Claim 9, **characterized in that** the transparent or semitransparent surface comprises touch-control means (47).

11. Man-machine interface (40) according to one of Claims 7 to 10, **characterized in that** the control means (52) of the screen module (42) are connected to a connector of the control panel via a connection (45) internal to the module (42).
